Europäisches Patentamt

European Patent Office

Office européen des brevets

(11) Veröffentlichungsnummer : **0 027 616**
**B1**

# (12) EUROPÄISCHE PATENTSCHRIFT

(45) Veröffentlichungstag der Patentschrift :
22.06.83

(21) Anmeldenummer : 80106176.3

(22) Anmeldetag : 10.10.80

(51) Int. Cl.³ : **B 29 F   1/06**

(54) **Rückströmsperre am Schneckenkopf von Schneckenspritzgiessmaschinen.**

(30) Priorität : 19.10.79 DE 2942317
21.08.80 DE 3031502

(43) Veröffentlichungstag der Anmeldung :
29.04.81 Patentblatt 81/17

(45) Bekanntmachung des Hinweises auf die Patenterteilung : 22.06.83 Patentblatt 83/25

(84) Benannte Vertragsstaaten :
AT CH FR GB IT LI NL

(56) Entgegenhaltungen :
FR A 2 363 429
GB A 860 217

(73) Patentinhaber : MANNESMANN DEMAG KUNST-
STOFFTECHNIK ZWEIGNIEDERLASSUNG DER MAN-
NESMANN DEMAG AKTIENGESELLSCHAFT
Rennweg 37
D-8500 Nürnberg (DE)

(72) Erfinder : Schirmer, Karl ·
Laurentiusstrasse 12c
D-8500 Nürnberg (DE)

(74) Vertreter : LOUIS, PÖHLAU, LOHRENTZ & SEGETH
Kesslerplatz 1
D-8500 Nürnberg (DE)

EP 0 027 616 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Rückströmsperre am Schneckenkopf von Schneckenspritzgießmaschinen

Die Erfindung betrifft eine Rückströmsperre am Schneckenkopf von Schneckenspritzgießmaschinen, mit einem auf dem Schneckenkopf zwischen einem vorderen und einem hinteren Anschlag frei verschiebbaren Druckring, der mit seinem Außenumfang an der Zylinderinnenwand geführt ist, an seinem Innenumfang einen Durchlaßspalt für das zu verspritzende Material, z. B. plastifizierte Kunststoffmasse, freilässt, und dessen mit dem hinteren Anschlag zusammenwirkende Fläche als Dichtfläche ausgebildet ist.

Rückströmsperren der vorstehend beschriebenen Art sind vielfach bekannt und im Einsatz (vgl. beispielsweise FR-A-2 363 429 und GB-A-860 217). Der zwischen den beiden Anschlägen verschiebbare Druckring wird während der Phase, in der die Masse durch die Schnecke nach vorne in den Sammelraum gefördert wird, durch den sich dabei einstellenden Drosselwiderstand an den vorderen Anschlag gedrückt, so daß die Dichtfläche des Druckringes von der hinteren Anschlagfläche abgehoben ist. Die Masse kann somit durch den Durchlaßspalt und durch in der vorderen Anschlagfläche vorgesehene Durchlässe hindurch zum Sammelraum gefördert werden. Beim Spritzhub hingegen wird der Druckring durch die in entgegengesetzter Richtung in den Durchlaßspalt einströmende Masse bis zum hinteren Anschlag verschoben, so daß dort eine Abdichtung erfolgt. Ein Rückströmen der im Sammelraum des Spritzzylinders befindlichen Masse in die Schneckengänge wird somit verhindert.

Ein Nachteil aller bekannten Rückströmsperren dieser Art besteht darin, daß der Schließvorgang der Rückströmsperre je nach der Viskosität des zu verspritzenden Materials mehr oder weniger lang dauert, wobei auch Schwankungen der Schließzeit von Schuß zu Schuß nicht zu vermeiden sind. Daraus folgt, daß insbesondere bei dünnflüssigen Materialien bis zum vollständigen Schließen der Rückströmsperre durchaus ins Gewicht fallende Mengen an Masse in die Schneckengänge zurückgelangen, so daß das Schußgewicht von Schuß zu Schuß schwankt und dementsprechend Qualitätsunterschiede der hergestellten Formteile zu verzeichnen sind. Es gibt bereits eine Reihe von Vorschlägen im Stand der Technik, die Schließzeit von Rückströmsperren der hier behandelten Art zu verkürzen, ohne die Masseströmung zwischen den geöffneten Dichtflächen und dem Durchlaßspalt zu behindern. Bisher konnten jedoch nur Teilerfolge in der Praxis erreicht werden.

Der Erfindung liegt die Aufgabe zugrunde, eine konstruktiv einfache Lösung für eine schnell schließende Rückströmsperre anzugeben, mit der folglich auch bei dünnflüssigen Materialien Masseverluste beim Spritzhub vermieden werden können und folglich das Schußgewicht jeweils konstant ist.

Erfindungsgemäß wird diese Aufgabe dadurch gelöst, daß im vorderen Bereich des Druckringes ein den Durchlaßspalt gegenüber einer Rückströmung verschließendes Rückschlagventil angeordnet ist.

Bei der erfindungsgemässen Rückströmsperre hat der Druckring zwar nach wie vor die Funktion, die Rückströmung der Masse in die Schneckengänge zu verhindern, und ist daher wie üblich abgedichtet an der Zylinderinnenwand geführt. Zusätzlich weist er jedoch in seinem der Schneckenspitze zugewendeten Endbereich ein Rückschlagventil auf, das beim Spritzhub praktisch als Vorsteuerventil reagiert und den Durchlaßspalt gegenüber einer Rückströmung verschließt.

Da das Rückschlagventil keine Abdichtfunktion gegenüber der Zylinderinnenwand hat, kann es verhältnismässig leicht ausgeführt werden, so daß es bereits auf sehr geringe Druckunterschiede anspricht. Da das Rückschlagventil den Durchlaßspalt verschließt, wird der Druckring nicht durch die Drosselwirkung des den Durchlaßspalt durchströmenden Materials in die Schließstellung geschoben, sondern allein durch den beim Spritzhub auftretenden Druckunterschied zwischen Sammelraum und Schneckengängen.

In einer vorteilhaften Ausführungsform der Erfindung ist das Rückschlagventil durch eine koaxial zum Druckring auf dem Schneckenkopf angeordnete frei bewegliche Ringscheibe gebildet, die mit einer vorderen Dichtfläche des Druckringes als Ventilsitz zusammenwirkt. Die Ringscheibe ist lose auf dem Schaft des Schneckenkopfes verschiebbar und wird durch diesen geführt. Ihr Durchmesser ist nur geringfügig grösser als der Innendurchmesser des Druckringes, so daß sie sich an die Stirnseite des Druckringes anlegen kann.

Um bei geöffneter Rückströmsperre die Anlage des Druckringes an dem vorderen Anschlag, der normalerweise durch Radialarme gebildet wird, zu ermöglichen, ist entweder in dem vorderen Anschlag oder in der vorderen Stirnseite des Druckringes eine Ausnehmung vorhanden, die die Ringscheibe aufnimmt.

Nach einer weiteren vorteilhaften Ausführungsform ist vorgesehen, daß das Rückschlagventil durch einen koaxial zum Druckring auf dem Schneckenkopf angeordneten frei beweglichen Ring gebildet ist, der mit einer vorderen Dichtfläche des Druckringes als Ventilsitz zusammenwirkt und der in Förderrichtung des zu verspritzenden Materials strömungsgünstig gestaltet ist.

Das Rückschlagventil nach dieser Ausführung bietet in seiner Schließrichtung einen verhältnismässig grossen Widerstand und unterbindet eine Materialrückströmung so weit wie möglich, andererseits wird jedoch in der Phase, in der bei sich langsam zurückbewegender Schnecke Material in den Sammelraum vor dem Schneckenkopf gefördert wird, die Materialströmung möglichst wenig behindert. Durch die strömungsgünstige Form, die der Ring in Förderrichtung des Materials hat, setzt er daher der Materialströmung einen geringen Widerstand entgegen, so daß auf den Ring und auf den Druckring eine geringe Schleppkraft ausgeübt wird. Daher wird während dieser Phase weder der Ventilring noch der Druckring mit übermässiger Kraft an den vorderen Anschlag des Schneckenkopfes angedrückt, so daß der Verschleiß gering bleibt. In der entgegengesetzten Richtung dagegen braucht auf eine strömungsgünstige Gestaltung des Ringes kein Wert gelegt zu werden weil es hier gerade erwünscht ist, daß bei der Vorwärtsbewegung der Schnecke beim Spritzhub schon eine kurze Bewegung zu einem Stau führt, der den Ring an die vordere Dichtfläche des Druckringes anlegt und den Durchlaßspalt verschließt.

In einer herstellungs- und montagetechnisch vorteilhaften Ausführungsform hat der Ventilring einen Querschnitt in Form eines regelmässigen Trapezes mit gleichen Basiswinkeln.

Weitere Vorteile und Merkmale der vorliegenden Erfindung ergeben sich aus der nachfolgenden Beschreibung von bevorzugten Ausführungsbeispielen anhand der beiliegenden Zeichnungen.

In den Zeichnungen zeigen :

Figur 1 einen schematischen Längsschnitt im Bereich des Schneckenkopfes durch eine erfindungsgemässe Rückströmsperre, wobei die untere Hälfte der Darstellung den Schließzustand und die obere Hälfte der Darstellung den Öffnungszustand der Rückströmsperre zeigt,

Figur 2 eine Ansicht auf die Schneckenspitze mit der Rückströmsperre gemäß Fig. 1, und

Figur 3 einen Axialschnitt durch die wesentlichen Teile einer Ausführungsvariante der erfindungsgemässen Rückströmsperre.

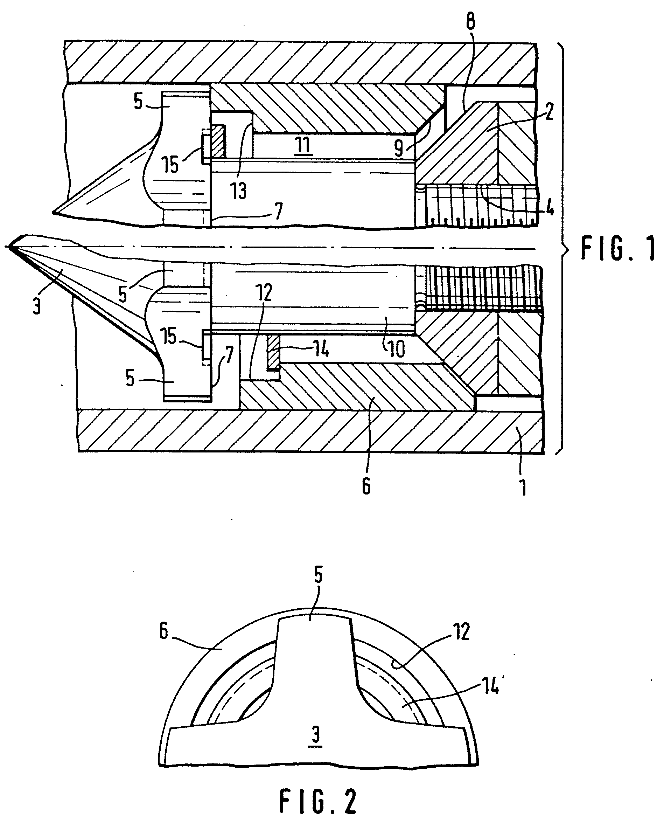

Gemäß der Darstellung in Fig. 1 weist die nicht dargestellte Spritzeinheit einen Spritzzylinder 1 auf, in dem in bekannter Weise eine Schnecke 2 drehbar und axial verschiebbar gelagert ist. Mit der Spritzeinheit können sowohl Kunststoffe als auch keramische Materialien verarbeitet werden. Der Schneckenkopf 3 wird durch ein gesondertes Formteil gebildet, das bei 4 mit der Schnecke 2 verschraubt ist. Der Schneckenkopf 3 weist in dem gezeigten Ausführungsbeispiel eine spitzkegelige Schneckenspitze auf, die sich zu Radialarmen 5 hin erweitert. Es sind vier gleichmässig auf dem Umfang verteilte Radialarme 5 vorgesehen, deren rückseitige Flächen 7 als vorderer Anschlag für einen Druckring 6 dienen.

Der Druckring 6 ist mit seiner zylindrischen Außenfläche an der Innenwand des Spritzzylinders 1 abgedichtet verschiebbar geführt. Sein Verschiebeweg ist begrenzt durch die den vorderen Anschlag bildenden Flächen 7 einerseits und durch eine den hinteren Anschlag bildende konische Dichtfläche 8 an der Schnecke 2, auf die sich der Druckring 6 mit einer entsprechend konisch gestalteten Dichtfläche 9 aufsetzen kann.

Zwischen dem Innenumfang des Druckringes 6 und dem Schaft 10 des Schneckenkopfes 3 wird ein ringförmiger Durchlaßspalt 11 für die zu verspritzende Masse gebildet. Die Fig. 1 zeigt in der oberen Hälfte den Druckring 6 in der Anlage an dem vorderen Anschlag 7, so daß zwischen den Dichtflächen 8 und 9, durch den Durchlaßspalt 11 und zwischen den Radialarmen 5 hindurch Masse strömen kann. Die untere Hälfte der Fig. 1 zeigt hingegen den Zustand, in dem die Rückströmsperre geschlossen ist, d. h. der Druckring 6 an den hinteren Anschlag hin verschoben ist, so daß die Dichtflächen 8, 9 aufeinander liegen.

Ausgehend von der vorderen Stirnseite des Druckringes 6 ist in diesen eine Ausnehmung 12 eingearbeitet, deren Durchmesser nur geringfügig grösser als der Innendurchmesser des Druckringes 6 ist. Die rückversetzte Stirnfläche 13 dieser Ausnehmung bildet eine Anlagefläche für eine Ringscheibe 14, deren Durchmesser ebenfalls geringfügig grösser als der Innendurchmesser des Druckringes 6 ist. Die Ringscheibe 14 ist auf dem Schaft 10 des Schneckenkopfes 3 axial verschiebbar angeordnet und kann sich folglich zwischen dem Anschlag 7 und der Stirnfläche 13 frei bewegen. Im radial inneren Bereich der Radialarme 5, d. h. an der Stelle, an der in der vorgeschobenen Stellung die Ringscheibe 14 an den Flächen 7 zur Anlage kommt, sind die Flächen 7 bei 15 örtlich freigedreht, um ein Ankleben oder Anhaften der Ringscheibe 14 an den Radialarmen 5 zu verhindern.

Die Wirkungsweise der erfindungsgemässen Rückströmsperre, insbesondere des durch die Ringscheibe 14 gebildeten Rückschlagventiles ist folgende :

In der Phase des Spritzzyklus, in der das Material durch die Schnecke 2 in den vor dem Schneckenkopf 3 liegenden Sammelraum des Spritzzylinders 1 gefördert wird, wird aufgrund der durch die Masse auf den Druckring 6 ausgeübten Kräfte der Druckring in die in Fig. 1 (obere Hälfte) ersichtliche Stellung verschoben, in der der Druckring 6 an dem vorderen Anschlag 7 anliegt. Die Masse kann somit zwischen den Dichtflächen 8, 9, durch den Durchlaßspalt 11 und durch die zwischen den Radialarmen 5 befindlichen Durchlässe in den Sammelraum gelangen. Zu dieser Zeit befindet sich auch die Ringscheibe 14 in ihrer vorderen Stellung, in die sie durch die hindurchströmende Masse gedrückt ist. Sie liegt dabei an den Anschlagflächen 7 der Radialarme 5 an.

Bei Beginn des Spritzhubes wird die Schnecke 2 in bekannter Weise axial nach vorne verschoben. Hierdurch wird das Druckgefälle in der zu verspritzenden Masse umgekehrt, d. h. die Masse versucht aus dem Sammelraum durch den Durchlaßspalt 11 hindurch in die Schneckengänge zurückzuströmen. Bereits bei einem sehr geringen vom Sammelraum her wirkenden Druckgefälle wird jedoch die Ringscheibe 14 nach Art eines Rückschlagventils nach hinten verschoben und gelangt zur Anlage an die Stirnfläche 13 der Ausnehmung 12 in dem Druckring 6. Da hierdurch der Durchlaßspalt 11 abgesperrt ist, wirkt ab sofort der Druckring 6 als Kolben in dem Spritzzylinder 1. Infolge des während des Spritzhubes rapid zunehmenden Druckgefälles von vorne nach hinten wird· daher der Druckring 6 sehr schnell an den hinteren Anschlag verschoben, wobei die Verschiebung allein aufgrund des Druckgefälles erfolgt. Da der Durchlaßspalt 11 verschlossen ist, tritt keinerlei Rückströmung von Spritzmasse nach dem Anlegen der Ringscheibe 14 an die Stirnfläche 13 ein.

Durch die Freidrehung 15 an den Radialarmen 5 wird verhindert, daß auf die Ringscheibe 14 eine Saugwirkung entsteht, die deren Verschiebung in Richtung auf die Stirnfläche 13 behindern könnte.

Die Ausnehmung 12 in dem Druckring 6 kann anstelle des im Ausführungsbeispiel gezeigten rechtwinkligen Überganges der Stirnfläche 13 zu der anschließenden Zylinderfläche auch eine Konusfläche oder eine gerundete Fläche aufweisen, um einen Totraum zu vermeiden. Zusätzlich oder anstelle der im Druckring vorgesehenen Ausnehmung 12 kann auch eine entsprechende Ausnehmung in den Radialarmen 5 ausgebildet sein, die so tief ist, daß eine behinderungsfreie Anlage des Druckringes 6 an den Anschlagflächen 7 möglich. ist. Da die Ringscheibe 14 verhältnismässig geringen Beanspruchungen ausgesetzt ist, kann sie zur Verringerung ihrer Masse aus einem leichteren Werkstoff als der Druckring 6 bestehen. Damit wird das rasche Ansprechverhalten der Rückströmsperre begünstigt.

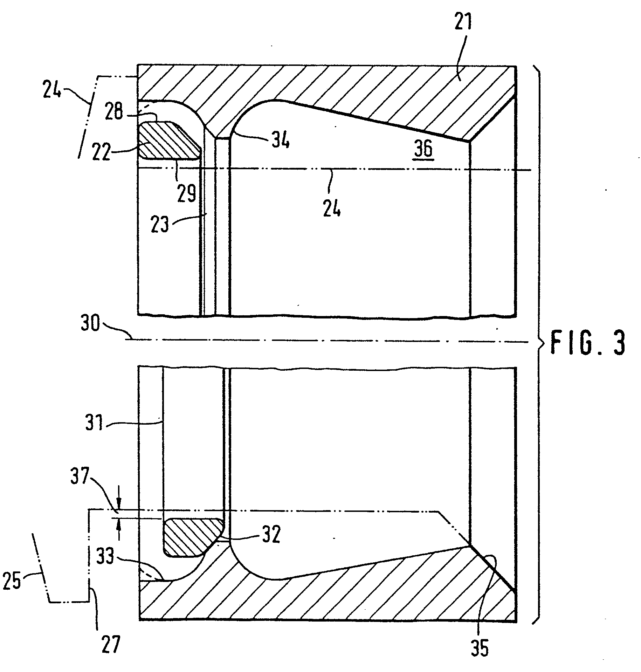

Die Fig. 3 zeigt einen Axialschnitt durch die wesentlichen Teile einer modifizierten Rückströmsperre, nämlich durch den Druckring 21 und den Ventilring 22, der zusammen mit der vorderen Dichtfläche 23 das Rückschlagventil bildet. In der oberen Hälfte der Zeichnung ist das Rückschlagventil in der Offenstellung, in der unteren Hälfte der Zeichnung in der Schließstellung gezeichnet. Strichpunktiert (mit Doppelpunkten) ist der Schneckenkopf mit den Radialarmen 25 angedeutet, deren rückseitige Flächen 27 als vorderer Anschlag für die vordere Stirnfläche des Druckringes 21 dienen.

Wie sich aus der Zeichnung ergibt, ist die Querschnittsform des Ventilringes 22 im wesentlichen diejenige eines Trapezes mit zueinander parallelen Seiten 28, 29, die parallel zur Schneckenachse 30 verlaufen. Die vordere Stirnfläche 31 des Ventilringes 22 liegt weitgehend senkrecht zur Achse 30 ; auf der Rückseite weist der Ventilring 22 eine konische Fläche auf, die komplementär zur vorderen Dichtfläche 23 des Druckringes 21 gestaltet ist. Die Übergänge von den Umfangsflächen 28, 29 zu den Stirnflächen 31, 32 des Ventilringes 22 sind strömungsgünstig gerundet.

Der Ventilring 22 ist in einer Ausnehmung 33 aufgenommen, deren Kontur der Querschnittsform des Ventilringes 22 angepasst ist. Auf diese Weise wird bei Offenstellung des Rückschlagventils ein weitgehend behinderungsfreier Strömungskanal geschaffen. Da jedoch, wie nachfolgend noch erläutert wird, die Strömungsbehinderung durch den Druckring 21 im Durchlaßspalt ohnehin sehr gering gehalten werden kann, ist es möglich, wie dies strichpunktiert angedeutet ist, die Ausnehmung 33 nach vorne hin etwas einzuziehen. Dadurch erhält man eine grössere Stirnfläche des Druckringes 21, die sich günstig auf den Verschleiß auswirkt.

Die vordere Dichtfläche 23 ist an einem nach innen vorspringenden Bund 34 des Druckringes 21 vorgesehen, zu dem hin sich der Durchlaßspalt 36, ausgehend von der hinteren Dichtfläche 35 des Druckringes 21, konisch erweitert. Trotz der durch den Bund 34 bedingten Einschnürung des Durchlaßspaltes 36 ist die auf den Druckring 21 ausgeübte Schleppkraft bei Durchströmung des Durchlaßspaltes 36 geringer als bei den bekannten Rückströmsperren.

Der zwischen der Umfangsfläche des Schneckenkopfes 24 und der Innenfläche des Ventilringes 22 vorhandene Ringspalt 37 ist in der Zeichnung etwas übertrieben dargestellt. In der Praxis hat sich eine Ringspaltbreite von etwa 1,2 bis 1,7 % des Innendurchmessers des Ventilringes 22 als brauchbar erwiesen. Bei einer Rückströmsperre mit den in der Zeichnung dargestellten Abmessungen (D = 130 mm) ergibt das eine Breite des Ringspaltes 37 von 1 bis 1,5 mm. Bei kleineren Schneckendurchmessern, z. B. D = 40 mm, liegt die Ringspaltbreite etwa bei 0,5 mm. Die axiale Länge des Ventilringes 22 beträgt in dem dargestellten Ausführungsbeispiel etwa 15 mm. Diese Bemessung des Ventilringes 22 und des Ringspaltes 37 hat sich auch bei sehr dünnflüssigem Kunststoffmaterial zur Erzielung sehr kurzer Schließzeiten der Rückströmsperre bewährt.

Die in Fig. 3 dargestellte konische Erweiterung des Durchlaßspaltes 36 ist keineswegs zwingend. Es ist selbstverständlich möglich, von vornherein den Durchmesser der vorderen Dichtfläche 23 so groß zu wählen, daß ein verhältnismässig breiter Durchlaßspalt 36 mit zylindrischer Gestalt verwirklicht werden kann. Die gezeigte Ausführungsform hat jedoch den Vorteil, daß relativ. zum Schneckendurchmesser ein grosser Durchlaßspalt 36 erzielbar ist, ohne den Schneckenkopf 24 zu schwächen. Außerdem kann die Rückströmsperre bereits bestehender Schneckenspritzgießmaschinen in dieser Form leicht umgearbeitet und erfindungsgemäß ausgestattet werden.

Weiterhin ist auch die im Ausführungsbeispiel gezeigte Querschnittsform des Ventilringes 22 in Form eines Trapezes mit ungleich langen nicht parallelen Seiten nicht zwingend. Eine Ausführung, bei der der Querschnitt des Ventilringes 22 die Form eines regelmässigen Trapezes mit gleichen Basiswinkeln an den nicht parallelen Seiten aufweist, hat den Vorteil, daß ein falscher Einbau des Ventilringes bei der Montage nicht möglich ist. So ist bei entsprechender Wahl dieser Basiswinkel immer die strömungsgünstige Form des Ventilringes in Strömungsrichtung gewährleistet, ohne daß eine besondere Lage des Ventilringes vorgeschrieben wäre.

## Ansprüche

1. Rückströmsperre am Schneckenkopf (3, 24) von Schneckenspritzgießmaschinen, mit einem auf dem Schneckenkopf (3, 24) zwischen einem vorderen und einem hinteren Anschlag frei verschiebbaren Druckring (6, 21), der mit seinem Außenumfang an der Zylinderinnenwand (1) geführt ist, an seinem Innenumfang einen Durchlaßspalt (11, 36) für das zu verspritzende Material, z. B. plastifizierte Kunststoffmasse, freilässt und dessen mit dem hinteren Anschlag zusammenwirkende Fläche als Dichtfläche (9, 35) ausgebildet ist, dadurch gekennzeichnet, daß im vorderen Bereich des Druckringes (6, 21) ein den Durchlaßspalt (11, 36) gegenüber einer Rückströmung verschließendes Rückschlagventil (14, 22) angeordnet ist.

2. Rückströmsperre nach Anspruch 1, dadurch gekennzeichnet, daß das Rückschlagventil durch eine koaxial zum Druckring (6) auf dem Schneckenkopf (3) angeordnete frei bewegliche Ringscheibe (14) gebildet ist, die mit einer vorderen Dichtfläche (13) des Druckringes (6) als Ventilsitz zusammenwirkt.

3. Rückströmsperre nach Anspruch 2, dadurch gekennzeichnet, daß bei Anlage des Druckringes (6) an dem vorderen Anschlag (7) die Ringscheibe (14) in einer Ausnehmung (12) des Anschlages (7) und/oder der Stirnseite des Druckringes (6) aufgenommen ist.

4. Rückströmsperre nach Anspruch 3, dadurch gekennzeichnet, daß in dem vorderen Anschlag (7) eine Freidrehung (15) im Bereich der Anlagefläche der Ringscheibe (14) vorgesehen ist.

5. Rückströmsperre nach einem der Ansprüche 2 bis 4, dadurch gekennzeichnet, daß die Ringscheibe (14) aus Leichtmetall besteht.

6. Rückströmsperre nach Anspruch 1, dadurch gekennzeichnet, daß das Rückschlagventil durch einen koaxial zum Druckring (21) auf dem Schneckenkopf (24) angeordneten frei beweglichen Ring (22) gebildet ist, der in Förderrichtung des zu verspritzenden Materials strömungsgünstig gestaltet ist.

7. Rückströmsperre nach Anspruch 6, dadurch gekennzeichnet, daß der Ring (22) auf seiner Rückseite eine Konusfläche (32) aufweist, die mit der vorderen entsprechend geformten Dichtfläche (23) an dem Druckring (21) zusammenwirkt.

8. Rückströmsperre nach Anspruch 6 oder 7, dadurch gekennzeichnet, daß der Ring (22) im Axialquerschnitt im wesentlichen trapezförmig ist, wobei die zueinander parallelen Trapezseiten (28, 29) achsparallel verlaufen und die grössere davon (29) in der Innenfläche des Ringes (22) liegt.

9. Rückströmsperre nach Anspruch 8, dadurch gekennzeichnet, daß der Axialquerschnitt des Ringes (22) die Form eines regelmässigen Trapezes mit gleichen Basiswinkeln hat.

10. Rückströmsperre nach einem der Ansprüche 6 bis 9, dadurch gekennzeichnet, daß der Ring (22) in einer der Form des Ringquerschnitts annähernd angepassten Ausnehmung (33) an der Stirnseite des Druckringes (21) aufgenommen ist.

11. Rückströmsperre nach einem der Ansprüche 1 bis 10, dadurch gekennzeichnet, daß der zwischen Innenumfang des Druckringes (21) und Schneckenkopf (24) gebildete Durchlaßspalt (36) sich in Förderrichtung des Materials erweitert.

12. Rückströmsperre nach Anspruch 11, dadurch gekennzeichnet, daß der Durchlaßspalt (36) sich zu einem von der Innenfläche des Druckringes (21) nach innen vorspringenden Bund (34) hin, der die vordere Dichtfläche (23) trägt, erweitert.

## Claims

1. A backflow barrier at the screw head (3, 24) of screw injection moulding machines, comprising a pressure ring (6, 21) which is freely displaceable on the screw head (3, 24) between front and rear abutments and which is guided with its outer periphery at the inside wall surface (1) of the cylinder and which leaves free at its inner periphery a gap (11, 36) for the material to be injected, for example plasticised synthetic resin, while the surface of the ring (6, 21) which cooperates with the rear abutment is formed as a sealing surface (9, 35), characterised in that disposed in the front region of the pressure ring (6, 21) is a check valve (14, 22) for closing the gap (11, 36) to prevent backflow.

2. A backflow barrier according to claim 1, characterised in that the check valve is formed by a freely movable annular disc (14) which is arranged on the screw head (3) coaxially with respect to the pressure ring (6) and which cooperates with a front sealing surface (13) of the pressure ring (6), as a valve seat.

3. A backflow barrier according to claim 2, characterised in that, when the pressure ring (6) bears against the front abutment (7), the annular disc (14) is received in a recess (12) in the abutment (7) and/or the end of the pressure ring (6).

4. A backflow barrier according to claim 3, characterised in that a faced recess configuration (15) is provided in the front abutment (7) in the region of the bearing surface of the annular disc (14).

5. A backflow barrier according to one of claims 2 to 4, characterised in that the annular disc (14) comprises light metal.

6. A backflow barrier according to claim 1, characterised in that the check valve is formed by a freely movable ring (22) which is arranged on the screw head (24) coaxially with respect to the pressure ring (21) and which is of a streamlined flow configuration in the direction of conveying movement of the material to be injected.

7. A backflow barrier according to claim 6, characterised in that, on its rear, the ring (22) has a taper surface (32) which co-operates with the front, correspondingly shaped sealing surface (23) on the pressure ring (21).

8. A backflow barrier according to claim 6 or claim 7, characterised in that the ring (22) is of substantially trapezoidal configuration in axial cross-section, wherein the mutually parallel sides (28, 29) of the trapezium extend parallel to the axis and the larger thereof (29) is disposed in the inside surface of the ring (22).

9. A backflow barrier according to claim 8, characterised in that the axial cross-section of the ring (22) is in the shape of a regular trapezium with equal base angles.

10. A backflow barrier according to one of claims 6 to 9, characterised in that the ring (22) is accommodated in a recess (33) at the end of the pressure ring (21), said recess being approximately adapted to the shape of the cross-section of the ring.

11. A backflow barrier according to one of claims 1 to 10, characterised in that the gap (36) formed between the inner periphery of the pressure ring (21) and the screw head (24) increases in width in the direction of conveying movement of the material.

12. A backflow barrier according to claim 11, characterised in that the gap (36) increases in width towards a shoulder portion (34) which projects inwardly from the inside surface of the pressure ring (21) and which carries the front sealing surface (23).

## Revendications

1. Barrage antireflux monté sur la tête (3, 24) de la vis de machines à mouler par injection à vis, comprenant une bague de pression (6, 21) qui peut se déplacer librement en translation sur la tête (3, 24) de la vis entre une butée avant et une butée arrière, qui est guidée par sa périphérie extérieure le long de la paroi intérieure (1) du cylindre, qui laisse libre sur sa périphérie intérieure une fente de passage (11, 36) pour la matière à injecter, par exemple pour une masse de matière plastique plastifiée, et dont la surface qui coopère avec la butée arrière forme une surface d'étanchéité (9, 35), caractérisé en ce que, dans la région avant de la bague de pression (6, 21), est agencé un clapet de retenue (14, 22) qui ferme la fente de passage (11, 36) à l'égard du refoulement.

2. Barrage antireflux suivant la revendication 1, caractérisé en ce que le clapet de retenue est formé d'un disque annulaire (14) librement mobile, monté sur la tête (3) de la vis, coaxialement à la bague de pression (6) et qui coopère avec une surface d'étanchéité avant (13) de la bague de pression (6) formant siège de clapet.

3. Barrage antireflux suivant la revendication 2, caractérisé en ce que, lorsque la bague de pression (6) est en contact avec la butée avant (7), le disque annulaire (14) est logé dans un évidement (12) de la butée (7) et/ou de la face frontale de la bague de pression (6).

4. Barrage antireflux suivant la revendication 3, caractérisé en ce qu'il est prévu dans la butée avant (7) un dégagement tourné (15) dans la région de la surface de portée du disque annulaire (14).

5. Barrage antireflux suivant l'une des revendications 2 à 4, caractérisé en ce que le disque annulaire (14) est en métal léger.

6. Barrage antireflux suivant la revendication 1, caractérisé en ce que le clapet de retenue est formé d'une bague (22) librement mobile, montée sur la tête (24) de la vis coaxialement à la bague de pression (21) et qui présente une forme favorable à l'écoulement dans le sens du refoulement de la matière à injecter.

7. Barrage antireflux suivant la revendication 6, caractérisé en ce que la bague (22) présente sur son côté arrière une surface conique (32) qui coopère avec la surface d'étanchéité avant (23) de forme correspondante présente sur la bague de pression (21).

8. Barrage antireflux suivant la revendication 6 ou 7, caractérisé en ce que la bague (22) est sensiblement trapézoïdale en section axiale, les côtés (28, 29) du trapèze qui sont parallèles entre eux s'étendant parallèlement à l'axe et le plus grand d'entre eux (29) se trouvant dans la surface intérieure de la bague (22).

9. Barrage antireflux suivant la revendication 8, caractérisé en ce que la section axiale de la bague (22) a la forme d'un trapèze régulier comportant des angles de base égaux.

10. Barrage antireflux suivant l'une des revendications 6 à 9, caractérisé en ce que la bague (22) est logée dans un évidement (33) de la face frontale de la bague de pression (21) qui est approximativement adaptée à la forme de la section de la bague.

11. Barrage antireflux suivant l'une des revendications 1 à 10, caractérisé en ce que la fente de passage (36) formée entre la périphérie intérieure de la bague de pression (21) et la tête (24) de la vis s'élargit dans le sens du refoulement de la matière.

12. Barrage antireflux suivant la revendication 11, caractérisé en ce que la fente de passage (26) s'élargit vers un épaulement (34) qui fait saillie vers l'intérieur sur la surface intérieure de la bague de pression (21) et qui porte la surface d'étanchéité avant (23).

FIG. 1

FIG. 2

1

FIG. 3